Europäisches Patentamt

European Patent Office

Office européen des brevets

(19)

(11) Veröffentlichungsnummer: **0 274 084 B1**

(12) **EUROPÄISCHE PATENTSCHRIFT**

(45) Veröffentlichungstag der Patentschrift: **15.05.91**

(51) Int. Cl.5: **A47B 88/00**, F16B 12/42

(21) Anmeldenummer: **87118377.8**

(22) Anmeldetag: **11.12.87**

(54) **Verbindungsbeschlag zur Befestigung der Reling einer Schublade an einer Rück- oder Seitenwand der Schublade.**

(30) Priorität: **08.01.87 AT 20/87**

(43) Veröffentlichungstag der Anmeldung:
**13.07.88 Patentblatt 88/28**

(45) Bekanntmachung des Hinweises auf die Patenterteilung:
**15.05.91 Patentblatt 91/20**

(84) Benannte Vertragsstaaten:
**AT CH DE FR GB IT LI SE**

(56) Entgegenhaltungen:
**EP-A- 0 124 059**
**DE-U- 8 531 302**
**FR-A- 1 030 009**
**FR-A- 2 270 475**

(73) Patentinhaber: **Julius Blum Gesellschaft m.b.H.**
**Industriestrasse 1**
**A-6973 Höchst(AT)**

(72) Erfinder: **Röck, Erich**
**Küferstrasse 7**
**A-6973 Höchst(AT)**
Erfinder: **Hollenstein, Helmut**
**Bildgasse 7**
**A-6890 Lustenau(AT)**

(74) Vertreter: **Torggler, Paul, Dr. et al**
**Wilhelm-Greil-Strasse 16**
**A-6020 Innsbruck(AT)**

EP 0 274 084 B1

## Beschreibung

Die Erfindung bezieht sich auf einen verbindungsbeschlag zur Befestigung der Reling einer Schublade an einer Rück- oder Seitenwand der Schublade mit einem an der Rück- oder Seitenwand befestigbaren Stützteil, in dem das hintere Ende der Reling gehalten ist, mit einem in die Reling einsteckbaren Befestigungsteil.

Ein derartiger Verbindungsbeschlag ist aus der EP-A1 0124 059 bekannt.

Im modernen Möbelbau sind Schubladen bekannt, bei denen die Frontblende mittels besonderer Halteeinrichtungen an den Schubladenzargen verstellbar befestigt werden kann. In manchen Fällen ist an der Schublade oberhalb jeder Schubladenzarge eine Reling vorgesehen, die sich von der Frontblende bis zur Möbelrückwand bzw. einer an der Möbelrückwand befestigten Stütze erstreckt.

Das DE-U-85 31 302 zeigt eine Schublade mit einer Reling die hinten durch eine Schnapp-Rast-Verbindung gehalten ist. Diese Verbindung setzt voraus, daß der Abstand von der vorderen zur hinteren Stütze der Reling mit der Länge der Reling genau übereinstimmt.

Aufgabe der Erfindung ist es, einen Verbindungsbeschlag zur Befestigung der Reling an der von der Frontblende abgewendeten Seite zu verbessern. Dabei kann die Reling sowohl an der Schubladenrückwand als auch am hinteren Ende der Schubladenzarge befestigt werden.

Die erfindungsgemäße Aufgabe wird dadurch gelöst, daß in den Befestigungsteil eine Klemmschraube eingesschraubt ist daß der Befestigungsteil, der vorzugsweise in die Reling einschraubbar ist, in den Stützteil einhängbar ist und daß der Stützteil mit einem offenen Schlitz versehen ist, durch den die Klemmschraube ragt.

Der Befestigungsteil kann während der Montage der Reling einerseits schnell in den Stützteil eingehängt werden, andererseits ist es möglich, durch Anziehen der Klemmschraube eine sehr feste Verbindung zu erzielen.

Vorteilhaft ist vorgesehen, daß der Befestigungsteil einen zylindrischen gewindelosen Abschnitt aufweist, der satt in der Reling aufgenommen ist.

Der erfindungsgemäße Befestigungsteil kann, um Toleranzen auszugleichen, mehr oder weniger weit in die Reling eingeschraubt werden. Wenn die Reling vorne mit einem Gewinde versehen ist, kann sie, wie in einer älteren Anmeldung der Anmelderin beschrieben, auch zur Neigungsverstellung der Frontblende herangezogen werden. Ein Ausgleich für das mehr oder weniger weite Hineinschrauben der Reling in die Frontblende kann durch den Befestigungsteil erzielt werden.

Ein Ausführungsbeispiel der Erfindung sieht vor, daß der Befestigungsteil mit einer Nase versehen ist, die in eine Ausnehmung des Stützteiles einhängbar ist.

Nachfolgend wird ein Ausführungsbeispiel der Erfindung anhand der Figuren der beiliegenden Zeichnungen eingehend beschrieben.

Die Fig. 1 zeigt ein Schaubild einer erfindungsgemäßen Schublade,

die Fig. 2 zeigt einen Vertikalschnitt durch die Verbindungsstelle zwischen der Rückwand und der Reling mit dem erfindungsgemäßen Verbindungsbeschlag,

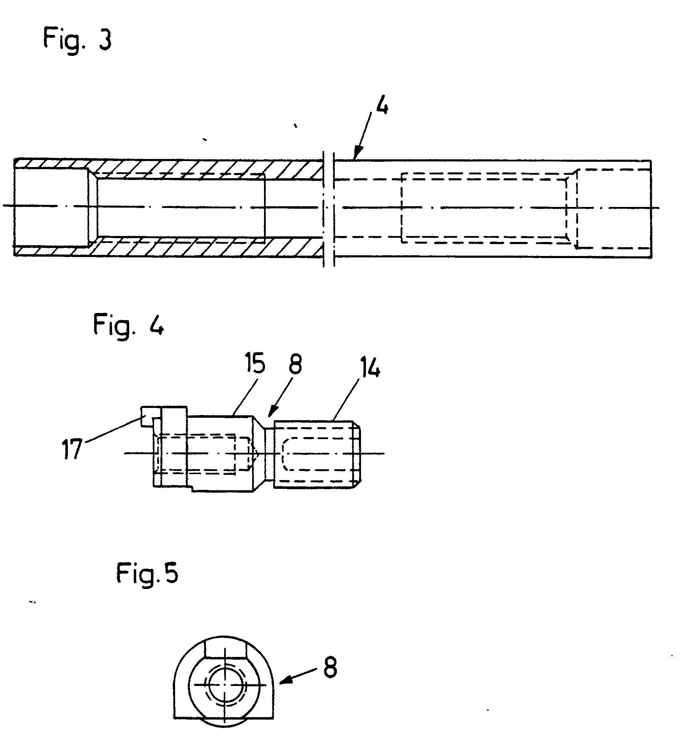

die Fig. 3 zeigt eine Seitenansicht einer Reling teilweise im Schnitt,

die Fig. 4 zeigt eine Seitenansicht des Befestigungsteiles,

die Fig. 5 zeigt eine Stirnansicht des Befestigungsteiles,

die Fig. 6 zeigt einen Aufriß des Stützteiles,

die Fig. 7 zeigt eine Seitenansicht des Stützteiles,

und die Fig. 8 zeigt eine Draufsicht auf den Stützteil teilweise im Schnitt.

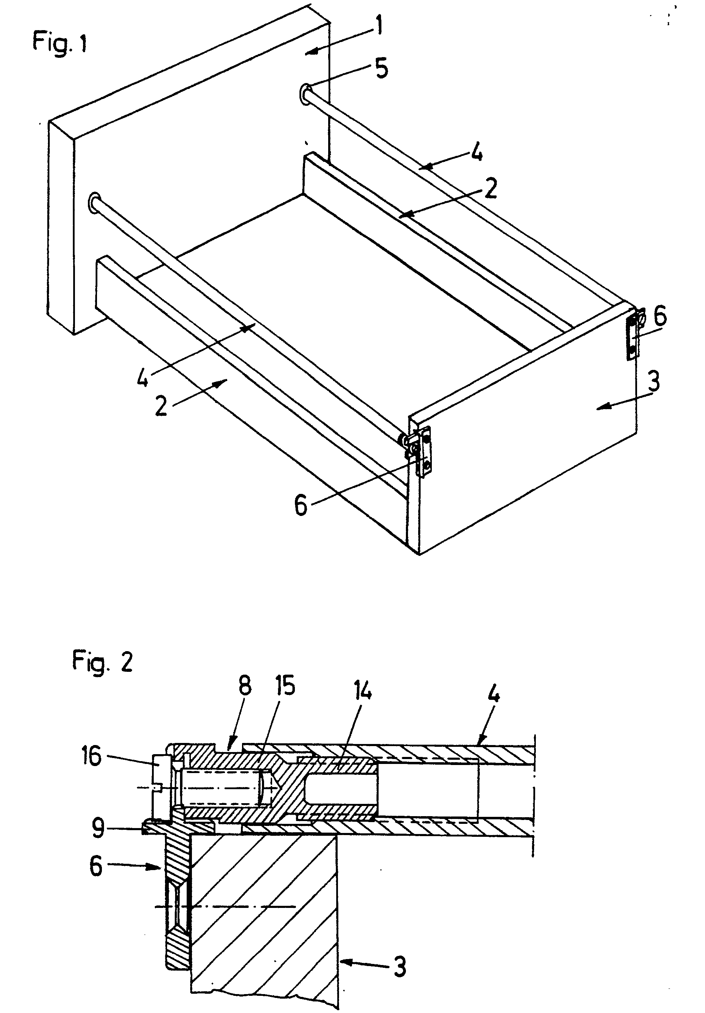

Wie aus der Fig. 1 der Zeichnungen ersichtlich, ist die Frontblende der Schublade mit 1, die Rückwand mit 3, und die Schubladenzargen sind mit 2 bezeichnet. An jeder Seite der Schublade ist oberhalb der Schubladenzarge eine Reling 4 vorgesehen.

Jede Reling 4 ist mittels eines Verbindungsbeschlages 5 an der Frontblende 1 befestigt. An die Rückwand 3 der Schublade ist an jeder Seite ein plattenförmiger Stützteil 6 angeschraubt.

Der plattenförmige Stützteil 6 weist einen seitlich vorspringenden Verankerungsteil 7 auf, in den die Reling 4 mit einem Befestigungsteil 8 einhängbar ist.

Ebenso ist der Stützteil 6 mit zwei Stegen 9 versehen, von denen jeweils einer an der Stirnseite der Rückwand 3 anliegt, sodaß der Stützteil 6 korrekt positioniert ist.

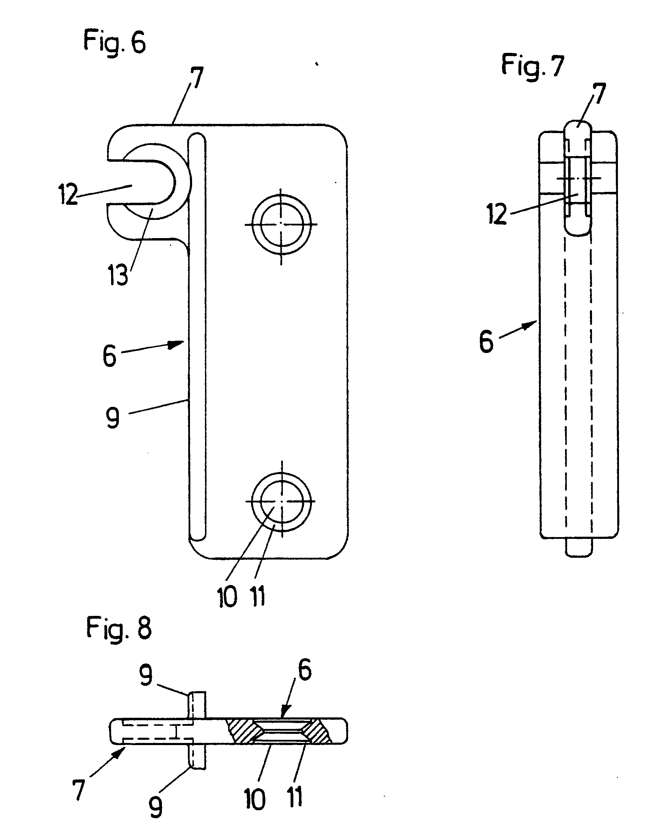

Wie aus den Figuren 2 und 6 bis 8 ersichtlich, ist der Stützteil 6 symmetrisch ausgeführt, sodaß er sowohl rechts als auch links an der Rückwand 3 angeschlagen werden kann.

Zur Befestigung des Stützteiles 6 sind in diesem Löcher 10 vorgesehen, die bei 11 beidseitig versenkt sind.

Im Verankerungsteil 7 ist ein offener Schlitz 12 und eine Ausnehmung 13 für den Befestigungsteil 8 vorgesehen.

Der Befestigungsteil 8 weist einen Gewindeabschnitt 14 und einen zylindrischen gewindelosen Abschnitt 15 auf, der satt in der Reling 4 aufgenommen ist.

Mittels des Gewindeabschnittes 14 ist der Befestigungsteil 8 mehr oder weniger weit in die Reling 4 einschraubbar, sodaß Unterschiede im Abstand zwischen der Frontblende 1 und der Rückwand 3 ausgeglichen werden können.

In den Befestigungsteil 8 ist eine Klemmschraube 16 eingeschraubt. Die Klemmschraube 16 ragt bei eingehängter Reling 4 durch den Schlitz 12 des Stützteiles 6 und der Stützteil 6 ist mittels der Klemmschraube 16 an den Befestigungsteil 8 klemmbar.

Der Befestigungsteil 8 ist mit einer Nase 17 versehen, die vorteilhaft in einer korrespondierenden Ausnehmung des Stützteiles 6 aufgenommen ist.

Die Stützteile 6 und die Befestigungsteile 8 können sowohl aus Kunststoff als auch aus Druckguß gefertigt sein.

## Ansprüche

1. Verbindungsbeschlag zur Befestigung der Reling einer Schublade an einer Rück- oder Seitenwand der Schublade mit einem an der Rück- oder Seitenwand befestigbaren Stützteil, in dem das hintere Ende der Reling gehalten ist, mit einem in die Reling einsteckbaren Befestigungsteil, dadurch gekennzeichnet, daß in den Befestigungsteil eine Klemmschraube eingeschraubt ist, daß der Befestigungsteil (8), der vorzugsweise in die Reling (4) einschraubbar ist, in den Stützteil (6) einhängbar ist, und daß der Stützteil (6) mit einem offenen Schlitz (12) versehen ist, durch den die Klemmschraube (16) ragt.

2. Verbindungsbeschlag nach Anspruch 1, dadurch gekennzeichnet, daß der Befestigungsteil (8) einen zylindrischen gewindelosen Abschnitt (15) aufweist, der satt in der Reling (4) aufgenommen ist.

3. Verbindungsbeschlag nach Anspruch 1, dadurch gekennzeichnet, daß der Befestigungsteil (8) mit einer Nase (17) versehen ist, die in eine Ausnehmung des Stützteiles (6) einhängbar ist.

## Claims

1. Connecting fitting for securing a drawer rail to a rear or side wall of the drawer with a supporting part which can be secured to the rear or side wall and in which the rear end of the rail is held, having a securing part which can be inserted into the rail, characterised in that there is screwed into the securing part a clamping screw, in that the securing part (8), which preferably can be screwed into the rail (4), can be suspended in the supporting part (6), and in that the supporting part (6) is provided with an open slot (12), through which the clamping screw (16) projects.

2. Connecting fitting in accordance with Claim 1, characterised in that the securing part (8) has a cylindrical, non-threaded section (15) which is snugly received in the rail (4).

3. Connecting fitting in accordance with Claim 1, characterised in that the securing part (8) is provided with a lug (17) which can be suspended in a recess of the supporting part (6).

## Revendications

1. Ferrure de liaison pour la fixation de la rambarde d'un tiroir sur une paroi arrière ou latérale du tiroir, avec une partie d'appui fixée sur la paroi arrière ou latérale, dans laquelle est maintenue l'extrémité arrière de la rambarde, avec une partie de fixation susceptible d'être enfichée dans la rambarde, caractérisée en ce qu'une vise de serrage est vissée dans la pièce de fixation, que la partie de fixation (8) qui est de préférence susceptible d'être vissée dans la rambarde (4) peut être accrochée dans la partie d'appui (6), et que la partie d'appui (6) est pourvue d'une fente ouverte (12) à travers laquelle passe la vis de serrage (16).

2. Ferrure de liaison selon la revendication 1, caractérisée en ce que la partie de fixation (8) présente une section cylindrique non filetée (15), logée entièrement dans la rambarde (4).

3. Ferrure de liaison selon la revendication 1, caractérisée en ce que la partie de fixation (8) est pourvue d'un ergot (17) qui est susceptible d'être accroché dans un évidement de la partie d'appui (6).

Fig. 1

Fig. 2

Fig. 3

4

Fig. 4

15    8    14

17

Fig. 5

8

Fig. 6

Fig. 7

Fig. 8